Europäisches Patentamt

(19) European Patent Office

Office européen des brevets

(11) Numéro de publication : **0 218 491 B1**

# (12) FASCICULE DE BREVET EUROPEEN

(45) Date de publication du fascicule du brevet :
27.02.91 Bulletin 91/09

(51) Int. Cl.⁵ : **H01H 9/54,** H02B 1/04

(21) Numéro de dépôt : 86401851.0

(22) Date de dépôt : 21.08.86

(54) **Dispositif d'assistance à la commutation électrique, notamment pour relais à contacts ou contacteurs ou autres moyens de télécommande similaires.**

(30) Priorité : 06.09.85 FR 8513261

(43) Date de publication de la demande :
15.04.87 Bulletin 87/16

(45) Mention de la délivrance du brevet :
27.02.91 Bulletin 91/09

(84) Etats contractants désignés :
AT BE CH DE FR GB IT LI NL

(56) Documents cités :
DE-A- 2 717 053
FR-A- 2 140 694
FR-A- 2 515 867
FR-A- 2 525 386

(73) Titulaire : HAGER ELECTRO S.A.
Boulevard d'Europe
F-67210 Obernai (FR)

(72) Inventeur : Beck, Dominique
13 rue Hohenbourg
F-67530 Ottrott (FR)
Inventeur : Roiatti, Jean-Marie
8 rue d'Obernai
F-67230 Benfeld (FR)

(74) Mandataire : Lemoine, Michel et al
Cabinet Michel Lemoine 13 Boulevard des
Batignolles
F-75008 Paris (FR)

## Description

Dispositif d'assistance à la commutation électrique, notamment pour relais à contacts ou contacteurs ou autres moyens de télécommande similaires.

Les appareils de commutation classiques comportent un ou plusieurs contacts qui sont actionnés, par l'intermédiaire d'un mécanisme, entre des positions d'ouverture et de fermeture. Ces appareils ou commutateurs mécaniques présentent un grand nombre d'avantages mais présentent l'inconvénient de voir les contacts soumis à l'usure par l'érosion provoquée par les arcs électriques qui se forment au moment de leurs actionnements sous charge. Il en résulte que la longévité et la fiabilité de ces commutateurs sont réduites lorsqu'ils doivent effectuer un très grand nombre de commutations.

On connaît d'autre part des commutateurs à semi-conducteur, tels que par exemple les triacs, permettant également un passage de puissance. Ces commutateurs ne présentent pas de contact ou autre partie mécanique et ne sont donc pas soumis aux inconvénients précités. Cependant ils entraînent une chute de tension non négligeable qui provoque une grande dissipation de chaleur, ce qui limite également les possibilités d'usage, de même que la fiabilité et la longévité de ces commutateurs.

Afin d'éliminer les inconvénients de ces deux commutateurs, on a déjà prévu d'associer un moyen de commutation à contact et un moyen de commutation à semi-conducteur en disposant dans un boîtier, d'une part, des contacts mécaniques et, d'autre part, des moyens de commutation à semi-conducteur qui peuvent être branchés en parallèle, ou en série, de façon que le moyen de commutation à semi-conducteur soit commuté à l'état conducteur avant la fermeture du contact, ou après l'ouverture de celui-ci, évitant ainsi la formation d'un arc. En outre une fois que le contact est fermé, l'essentiel de la puissance électrique transite par le contact, épargnant ainsi le moyen de commutation à semi-conducteur qui ne tend pas à s'échauffer.

Les dispositifs ainsi réalisés présentent cependant l'inconvénient d'être encombrants et coûteux dans une réalisation sous forme modulaire compacte telle qu'utilisée de façon usuelle dans l'appareillage électrique destiné au grand public ou au bâtiment. D'autre part, le besoin de ce type de produit est limité à quelques cas d'emploi bien particuliers, rendant l'investissement difficilement justifiable.

Le document FR-A-2 525 3-96 décrit un dispositif de commutation conforme au préambule de la revendication 1. Dans ce document, il n'est pas possible de dissocier les fonctions de commutation et d'aide à la commutation et le dispositif décrit, qui n'est pas du type modulaire, est incapable d'être utilisé pour l'aide à la commutation électrique d'un appareil différent. La présente invention se propose de remédier à ces inconvénients et de fournir un dispositif d'aide à la commutation qui soit simple, peu coûteux et peu encombrant, qui ne nécessite pas la transformation des moyens de commutation usuels et qui soit adapté à une construction modulaire, et limité au seul cas où le besoin l'exige.

L'invention a pour objet un ensemble de commutation électrique, comprenant, interposés entre deux bornes de puissance, un moyen de commutation à semi-conducteur et un moyen de commutation électromécanique, ainsi que des moyens électroniques sensibles à un signal de commande pour piloter ledit moyen de commutation à semi-conducteur pour qu'il soit parcouru par le courant de puissance avant la fermeture et après l'ouverture du moyen de commutation électromécanique, caractérisé en ce que, en vue de constituer un appareil auxiliaire destiné à être associé à divers appareils électriques modulaires de commutation à contact, tels que relais à contacts ou contacteurs ou autres appareils de télécommande similaires, le moyen de commutation à semi-conducteur et les moyens électroniques sont logés dans un boîtier modulaire de même module que les appareils modulaires à contact et en ce que, en plus des deux bornes de puissance, ledit boîtier modulaire présente également des bornes de sortie reliées auxdits moyens électroniques et aptes à être reliées à des bornes de commande de l'appareil modulaire à contact associé, pour l'envoi audit appareil associé, par les moyens électroniques, du signal de commande de la fermeture ou de l'ouverture du ou des contacts de l'appareil associé.

Le dispositif de la présente invention peut être ainsi facilement associé, sur un même rail de fixation, à un appareil de commutation à contact tel que relais ou autre disposé également dans un boîtier modulaire similaire. Par une connexion convenable entre le dispositif selon l'invention et l'appareil de commutation à contact, on peut disposer les moyens de commutation à semi-conducteur en parallèle ou en série avec les bornes de puissance de l'appareil de commutation à contact, et conditionner la commande de ce dernier à la commande du dispositif suivant l'invention.

Le moyen de commutation à semi-conducteur est de préférence un triac ou thyristor.

Le moyen ou circuit électronique sensible au signal de commande est conçu pour commander le moyen de commutation à semi-conducteur et le rendre conducteur dès le début du signal de commande et avant même que le contact de l'appareil de commutation à contact ne se soit trouvé actionné. Ceci peut être aussi obtenu, dans certains cas, en jouant sur la grande rapidité de mise en conduction du commutateur à semi-conducteur, comparé au temps nécessaire au déplacement mécanique du contact. Dans ce cas le montage du dispositif selon l'invention et de l'appareil de commutation à contact est réalisé de façon qu'aussi bien le commutateur à semi-conducteur que l'appareil soient simultanément sensibles au circuit de commande.

Cependant on peut, dans de nombreux cas, préférer utiliser le circuit électronique associé en le reliant à la borne de commande de l'appareil de commutation à contact, pour qu'il adresse à ce dernier le signal de commande de bobine provoquant la fermeture du contact et après un certain temps suffisant pour que le commutateur à semi-conducteur ait été rendu conducteur, de préférence à l'angle de l'alternance de tension le plus favorable, par exemple au zéro de tension. Ceci a pour effet de limiter les nuisances générées par la fermeture. On peut également prévoir de rendre conducteur le commutateur à semi-conducteur à un angle d'alternance de tension favorable, par exemple au zéro de tension, de façon à réduire ou supprimer les tensions parasites.

Quel que soit le mode de branchement du dispositif, le moyen ou circuit électronique sensible au signal de commande est par ailleurs agencé de façon à continuer à faire passer le courant de puissance par le commutateur à semi-conducteur après le signal de commande provoquant l'ouverture de l'appareil de commutation à contact mécanique.

On peut ainsi, aussi bien lors de la fermeture que lors de l'ouverture du ou des contacts mécaniques, s'assurer qu'aucun arc électrique ne s'établit au niveau de la zone de contact.

Le circuit électronique auxiliaire peut également être agencé pour empêcher le passage du courant à travers le conmutateur à semi-conducteur pendant que le ou les contacts mécaniques sont fermés. Cependant on peut également éviter un tel agencement du fait que le commutateur à contact court-circuite le commutateur à semi-conducteur dont l'impédance est bien supérieure de sorte que ce dernier n'est de toute façon parcouru que par une puissance négligeable.

La durée des retards à la fermeture et/ou à l'ouverture dépend de la rapidité de la commutation mécanique par le ou les contacts. D'une façon générale, on peut avantageusement utiliser une durée de l'ordre d'une ou deux périodes du secteur, c'est-à-dire de l'ordre de 20 à 40 millisecondes.

D'autres avantages et caractéristiques de l'invention apparaîtront à la lecture de la description suivante, faite à titre d'exemple non limitatif et se référant au dessin annexé dans lequel :

- la figure 1 représente une vue schématique d'un dispositif selon l'invention associé à son relais,
- la figure 2 représente une vue en coupe d'un dispositif selon l'invention avec son boîtier modulaire,
- la figure 3 représente une vue debout de ce dispositif, associé à un relais avec les branchements adéquats,
- la figure 4 représente un graphique montrant le fonctionnement de ce dispositif.

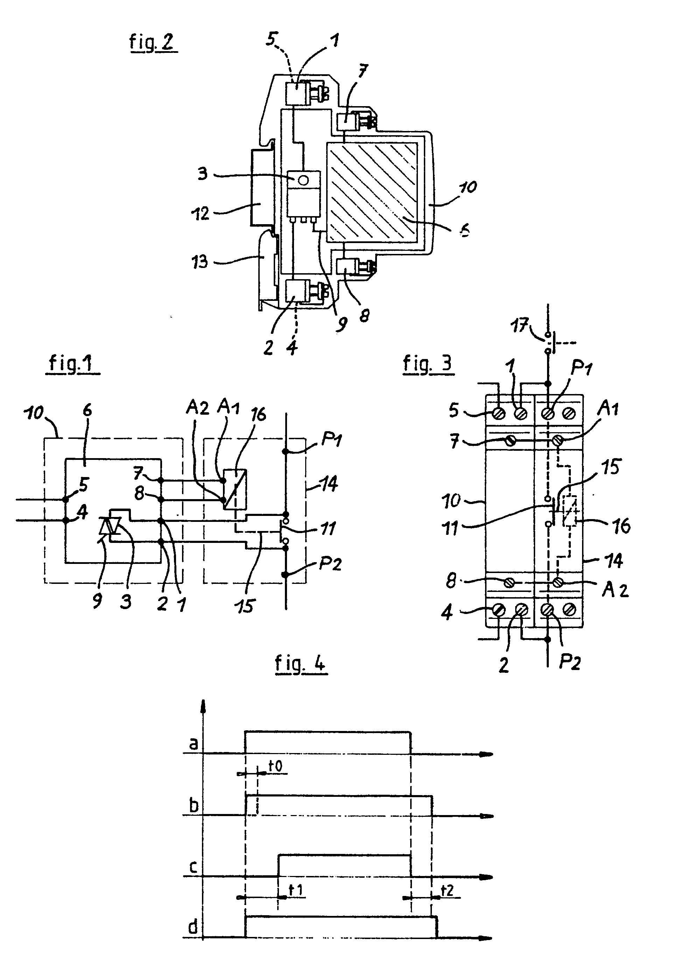

En se référant aux figures 1 et 2, on voit que le dispositif selon l'invention comporte, dans un boîtier modulaire 10, deux bornes de puissance 1,2, un triac de puissance 3 étant interposé entre les bornes 1 et 2. Le dispositif comporte également deux bornes de commande 4 et 5 aboutissant à un circuit électronique auxiliaire 6 destiné à piloter la gâchette 9 du triac 3 et les bornes de sortie 7 et 8.

Le triac 3 est disposé à la partie inférieure du boîtier 10 et du circuit électronique 6. Le boîtier 10 peut être monté, de même que le relais, sur un rail de fixation 12 sur lequel il est maintenu par un loquet usuel 13. De préférence, le montage s'effectue en disposant le dispositif modulaire selon l'invention immédiatement à côte du relais auquel il est associé.

En se référant plus particulièrement aux figures 2 et 3, on voit que le dispositif selon l'invention comporte un boîtier modulaire 10 incorporant les bornes 1-2 et 7-8 avec une disposition identique à celle d'un boîtier modulaire usuel de relais 14.

Ce relais 14 qui comporte les bornes usuelles de puissance P1, P2, le contact 11 avec son mécanisme 15 et la bobine 16 actionnant le mécanisme 15 et provoquant donc l'ouverture ou fermeture du contact 11 du relais 14.

De façon avantageuse les bornes de sorties 7 et 8 du dispositif selon l'invention parviennent au même niveau que les bornes AI et A2 de commande de la bobine 16 de l'appareil de commutation à contact 14 ce qui facilite le branchement, comme on le voit sur la figure 3.

On a représenté sur la figure 4 le graphique d'une étape de fonctionnement. On voit sur la ligne supérieure $\underline{a}$ un signal de commande avec son front ascendant initial et son front descendant final. Lorsque le signal de commande est perçu sur les bornes 4 et 5 de commande du dispositif, celui-ci met immédiatement le triac en conduction comme on le voit sur la ligne $\underline{b}$. En variante le circuit 6 peut être agencé pour ne mettre le triac 3 en conduction qu'après un léger retard t0, ce qui permet alors la mise en service préalable d'un contact classique 17, figure 3, situé en amont sur le circuit de puissance et dont le rôle apparaîtra ultérieurement.

Par contre, comme on le voit sur la ligne $\underline{c}$, le circuit 6 génère un retard t1 au bout duquel la bobine du relais se trouve commandée et provoque la fermeture du contact 11. Il en résulte qu'au moment où débute la fermeture du contact 11, la puissance du circuit de puissance est dérivée par le triac 3.

Une fois que le contact 11 a été fermé, le courant passe pratiquement exclusivement par le contact 11, le triac 3 n'étant parcouru que par un courant résiduel extrêmement faible qui n'entraîne pas un échauffement perceptible.

Lorsque le signal de commande (ligne $\underline{a}$) prend fin, l'électronique de commande 6 autorise l'ouverture immédiate du contact 11. Par contre, elle maintient le triac 3 conducteur pendant une durée supplémentaire t2 supérieure au temps d'ouverture.

Il en résulte qu'aucune surtension ou formation d'arc ne peut se produire au niveau du contact 11, jusqu'à l'ouverture du relais.

Au cas où le contact 17 est présent, le circuit 6 est agencé pour provoquer son ouverture après l'arrêt de la conduction du triac 3. Ainsi, le contact 17 assure le sectionnement de la ligne et élimine le léger courant de fuite qui, autrement, passerait par le triac.

A titre d'exemple, le dispositif modulaire représenté sur la figure 1 présente un boîtier dont la plus grande dimension, dans le sens horizontal de la figure 1, est de 58 mm et la hauteur de 85 mm, l'épaisseur étant de 17,5 mm.

La forme du boîtier 10 est analogue ou identique à celle des appareils de commutation, relais ou autres, du type utilisé dans le bâtiment.

La chaleur produite reste faible, et est dépendante de la fréquence de fonctionnement du triac.

La durée de vie du relais associé au dispositif selon l'invention, qui est habituellement de 0,5 million de manoeuvres est portée jusqu'à voir 6 millions de manoeuvres.

## Revendications

1. Ensemble de commutation électrique, comprenant, interposés entre deux bornes de puissance, un moyen de commutation à semi-conducteur (3) et un moyen de commutation électromécanique (11), ainsi que des moyens électroniques (6) sensibles à un signal de commande pour piloter ledit moyen de commutation à semi-conducteur (3) pour qu'il soit parcouru par le courant de puissance avant la fermeture et après l'ouverture du moyen de commutation électromécanique (11), caractérisé en ce que, en vue de constituer un appareil auxiliaire destiné à être associé à divers appareils électriques modulaires de commutation à contact (14), tels que relais à contacs ou contacteurs ou autres appareils de télécommande similaires, le moyen de commutation à semi-conducteur (3) et les moyens électroniques (6) sont logés dans un boîtier modulaire (10) de même module que les appareils modulaires à contact (14) et en ce que, en plus des deux bornes de puissance (1, 2), ledit boîtier modulaire (10) présente également des bornes de sortie (7, 8) reliées auxdits moyens électroniques (6) et aptes à être reliées à des bornes de commande (Al, A2) de l'appareil modulaire à contact associé (14), pour l'envoi audit appareil associé (14), par les moyens électroniques (6), du signal de commande de la fermeture ou de l'ouverture du ou des contacts (11) de l'appareil associé (14).

2. Ensemble selon la revendication 1, caractérisé en ce que les bornes de puissance (1, 2) et les bornes de sortie (7, 8) de l'appareil auxiliaire sont disposées respectivement au voisinage des bornes de puissance (P1, P2) et de commande (Al, A2) de l'appareil de commutation à contact (14) associé lorsque ledit appareil auxiliaire est placé à côté de lui aux fins d'assistance.

3. Ensemble selon la revendication 1 ou 2, caractérisé en ce que le boîtier (10) contient un circuit électronique auxiliaire (6) sensible au signal de commande pour piloter le moyen de commutation à semi-conducteur (3).

4. Ensemble selon la revendication 3, caractérisé en ce que le circuit électronique auxiliaire (6) pilote également l'appareil de commutation à contact (14).

5. Ensemble selon la revendication 4, caractérisé en ce que ledit circuit électronique auxiliaire (6) est sensible au front ascendant du signal de commande pour retarder pendant une durée (t1) l'excitation de la ou des bobines de l'appareil de commutation à contact associé (14), alors que la mise en conduction du moyen de commutation à semi-conducteur (3) est autorisée.

6. Ensemble selon l'une quelconque des revendications 4 et 5, caractérisé en ce que ledit circuit électronique de commande (6) est sensible au front descendant du signal de commande pour maintenir le moyen de commutation à semi-conducteur (3) conducteur pendant une durée de retard (t2) après l'ouverture de contact de l'appareil de commutation à contact associé (14).

7. Ensemble selon l'une quelconque des revendications 3 à 6, caractérisé en ce que ledit circuit électronique (6) est agencé de façon à retarder d'un temps (t0) la mise en conduction du moyen de commutation à semi-conducteur (3), pendant lequel il peut provoquer la fermeture d'un contact de sectionnement (17) placé en amont sur le circuit de puissance, ledit circuit électronique (6) provoquant par ailleurs l'ouverture dudit contact de sectionnement (17) au moment de, ou après, la fin de la mise en conduction du moyen de commutation à semi-conducteur (3).

8. Ensemble selon la revendication 5, caractérisé en ce que le circuit électronique (6) est agencé pour piloter l'excitation de la ou des bobines de l'appareil de commutation à contact associé (14) pour provoquer la fermeture du contact du moyen de commutation électromécanique (11) au moment le plus favorable d'une alternance.

9. Ensemble selon l'une des revendications 5 et 8, caractérisé en ce que le commutateur à semi-conducteur (3) devient conducteur au moment le plus favorable d'une alternance.

10. Ensemble selon l'une quelconque des revendications 1 à 9, caractérisé en ce que ledit moyen de commutation à semi-conducteur (3) est un triac.

11. Ensemble selon l'une quelconque des revendications 1 à 9, caractérisé en ce que le moyen de commutation à semi-conducteur (3) est un thyristor.

## Ansprüche

1. Elektrische Schaltvorrichtung enthaltend, zwischen zwei Leistungsanschlüssen angeordnet, eine Halbleiterschalteinrichtung (3) und eine elektromagnetische Schalteinrichtung (11) sowie elektronische Einrichtungen (6), die auf ein Steuersignal empfindlich sind, um die genannte Halbleiterschalteinrichtung (3) zu steuern, damit diese vom Leistungsstrom vor dem Schließen und nach dem Öffnen der elektromagnetischen Schalteinrichtung (11) durchflossen wird, **dadurch gekennzeichnet**, daß zur Bildung einer Hilfsvorrichtung, die dazu bestimmt ist, verschiedenen elektrischen modularen Kontaktschaltvorrichtungen (14) zugeordnet zu werden, wie beispielsweise Kontaktrelais, Schützen oder ähnlichen ferngesteuerten Vorrichtungen, die Halbleiterschalteinrichtung (3) und die elektronischen Einrichtungen in einem modularen Gehäuse (10) desselben Moduls untergebracht sind, wie die modularen Kontaktvorrichtungen (14), und daß zusätzlich zu den zwei Leistungsanschlüssen (1, 2) das genannte modulere Gehäuse (10) auch Ausgangsanschlüsse (7, 8) aufweist, die mit den elektronischen Einrichtungen (6) verbunden und dazu eingerichtet sind, mit steueranschlüssen (A1, A2) der zugehbrigen modularen Kontaktvorrichtung verbunden zu werden für dte Übertragung des steuersignals 2um Schließen oder Öffnen des oder der Kontakte (11) der zugehörigen Vorrichtung (14) durch die elektronischen Einrichtungen (6).

2. Vorrichtung nach Anspruch 1, dadurch gekennzeichnet, daß die Leistungsanschlüsse (1, 2) und die Auegangsanschlüsse (7, 8) der Hilfevorrichtung jeweile in Nachbarschaft der Stromanechlüsse (P1, P2) und der Steueranechlüsse (A1, A2) der zugehörigen Kontaktschaltvorrichtung (14) angeordnet sind, wenn die Hilfsvorrichtung zu Unterstützungszwecken neben ihr angeordnet ist.

3. Vorrichtung nach Anspruch 1 oder 2, dadurch gekennzeichnet, daß das Gehäuse (1) eine elektronische Hilfeschaltung (6) enthält, die auf das Steuersignal empfindlich ist, um die Halbleiterschalteinrichtung (3) zu steuern.

4. Vorrichtung nach Anspruch 3, dadurch gekennzeichnet, daß die elektronische Hilfeschaltung (6) auch die Kontaktschaltvorrichtung (14) steuert.

5. Vorrichtung nach Anspruch 4, dadurch gekennzeichnet, daß die elektronische Hilfsschaltung (6) auf die Anstiegsflanke des Steuersignals empfindlich ist, um für eine Dauer (t1) die Erregung der Sgule(n) der ezugehörigen Kontaktschaltvorrichtung (14) zu verzögern, währand die Halbleiterschalteinrichtung (3) in die Lage versetzt wird, in den Leitfähigkeitszustand gebracht zu werden.

6. Vorrichtung nach einem der Ansprüche 4 und 5, dadurch gekennzeichnet, daß die elektronische Steuerschaltung (6) auf die Abstiegsflanke des Steuersignals empfindlich ist, um die Halbleiterschalteinrichtung (3) während einer Verzögerungszeit (t2) nach Öffnen des Kontakts der zugehörigen Kontaktschaltvorrichtung (14) leitfähig zu halten.

7. Vorrrichtung nach einem der Ansprüche 3 bis 6, dadurch gekennzeichnet, daß die elektronische Schaltung (6) derart eingerichtet ist, daß sie das Leitfähigmachen der Halbleiterschalteinrichtung (3) um eine Zeit (t0) verzögert, während der sie das Schließen eines Trennkontaktes (17) hervorrufen kann, der stromaufwärts der Leistungsschaltung angeordnet ist, wobei die elektronische Schaltung (6) darüberhinaus das Öffnen des Trennkontaktes im oder nach dem Augenblick der Beendigung der Leitfähigmachung der Halbleiterschalteinrichtung (6) hervorruft.

8. Vorrichtung nach Anspruch 5, dadurch gekennzeichnet, daß die elektronische Schaltung (6) dazu eingerichtet ist, die Erregung der Spule(n) der Zugehörigen Kontaktschaltvorrichtung zu steuern, um das Schließen des Kontaktes der elektromechanischen Schalteinrichtung (11) im günstigsten Augenblick eines Stromwechsels hervorzurufen.

9. Vorrichtung nach einem der Ansprüche 5 und 8, dadurch gekennzeichnet, daß die Halbleiterschalteinrichtung (3) im günstigsten Augenblick eines Stromwechsels leitfähig wird.

10. Vorrichtung nach einem der Ansprüche 1 bis 9, dadurch gekennzeichnet, daß die Halbleiterschalteinrichtung (3) ein Triac ist.

11. Vorrichtung nach einem der Ansrüche 1 bis 9, dadurch gekennzeichnet, daß die Halbleiterschalteinrichtung (3) ein thyristor ist.

## Claims

1. Electrical switching assembly comprising, interposed between two power terminals, a semi-conductor switching means (3) and an electromechanical switching means (11) as well as electronic means (6) sensitive to a control signal for governing the said semi-conductor switching means (3) so that it is traversed by the power current prior to closure and after opening of the electromechanical switching means (11), characterised in that with a view to constituting an auxiliary appliance intended to be associated with various electrical modular contact switching appliances (14) such as contact relays or contactors or other similar remote-controlled appliances, the semi-conductor switching means (3) and the electronic means (6) are housed in a modular casing (10) of the same module as the modular contact appliances (14) and in that in addition to the two power terminals (1, 2), the said modular casing (10) likewise comprises output terminals (7, 8) connected to the said electronic means (6) and adapted to be connected to operating terminals (A1, A2) and to the associated modular contact appliance (14) for sending the signal to operate opening or closing of the contact or contacts (11) of the associated appliance (14) to the said associated appliance (14) via the electronic means (6).

2. An assembly according to Claim 1, characterised in that the power terminals (1, 2) and the output terminals (7, 8) of the auxiliary appliance are disposed respectively in the vicinity of the power terminals (P1, P2) and operating terminals (A1, A2) of the associated contact switching appliance (14) when the said auxiliary appliance is placed alongside it for assistance purposes.

3. An assembly according to Claim 1 or 2, characterised in that the casing (10) contains an auxiliary electronic circuit (6) sensitive to the operating signal to control the semi-conductor switching means (3).

4. An assembly according to Claim 3, characterised in that the auxiliary electronic circuit (6) likewise governs the contact switching appliance (14).

5. An assembly according to Claim 4, characterised in that the said auxiliary electronic circuit (6) is sensitive to the ascending front of the operating signal in order to delay for a period (t1) the energising of the terminal or terminals of the associated contact switching appliance (14) while rendering of the semi-conductor switching means (3) conductive is authorised.

6. An assembly according to any one of Claims 4 and 5, characterised in that the said electronic operating circuit (6) is sensitive to the descending front of the operating signal in order to maintain the semi-conductor switching means (3) conductive for a period (t2) of delay after opening of the contact of the associated contact switching appliance (14).

7. An assembly according to any one of Claims 3 to 6, characterised in that the said electronic circuit (6) is arranged to retard by a period (t0) the rendering conductive of the semi-conductor switching means (3) during which time it is able to cause closure of an isolating contact (17) placed upstream in the power circuit, the said electronic circuit (6) otherwise producing an opening of the said isolating contact (17) at the moment of or following completion of the rendering of the semi-conductor switching means (3) conductive.

8. An assembly according to Claim 5, characterised in that the electronic circuit (6) is arranged to govern excitation of the coil or coils of the associated contact switching appliance (14) in order to produce closure of the contact by the electromechanical switching means (11) at the most favourable moment in an alternating cycle.

9. An assembly according to one of Claims 5 and 8, characterised in that the semi-conductor switching means (3) becomes conductive at the most favourable moment in an alternating circuit.

10. An assembly according to any one of Claims 1 to 9, characterised in that the said semi-conductor switching means (3) is a triac.

11. An assembly according to any one of Claims 1 to 9, characterised in that the semi-conductor switching means (3) is a thyristor.

fig. 2

fig. 1

fig. 3

fig. 4